# EUROPÄISCHE PATENTSCHRIFT

(11) **EP 2 855 243 B1**
(45) Veröffentlichungstag und Bekanntmachung des Hinweises auf die Patenterteilung: **07.03.2018**
(21) Anmeldenummer: 13723001.7
(22) Anmeldetag: 16.05.2013
(51) Int. Cl.: B62D 35/00, B60Q 1/26, B60Q 1/30

(54) **BAUGRUPPE ZUM BILDEN EINES LUFTLEITELEMENTS FÜR EIN KRAFTFAHRZEUG**
ASSEMBLY FOR FORMING AN AIR-GUIDING ELEMENT FOR A MOTOR VEHICLE
MODULE DE FORMATION D'UN ÉLÉMENT DE GUIDAGE DE L'AIR DESTINÉ À UN VÉHICULE

(30) Priorität: 05.06.2012 DE 202012102063 U
(43) Veröffentlichungstag der Anmeldung: 08.04.2015
(73) Patentinhaber: REHAU AG + Co, 95111 Rehau (DE)
(72) Erfinder: ANDERSECK, Bennet, 95028 Hof (DE); WOLFF, Christian, 95030 Hof (DE); KIRCHGESNER, Paul, 95145 Oberkotzau (DE); KAMMERER, Jörg, 95632 Wunsiedel (DE)
(86) Internationale Anmeldenummer: PCT/EP2013/001447
(87) Internationale Veröffentlichungsnummer: WO 2014/005660

(56) Entgegenhaltungen:
- EP-A1- 1 083 099
- DE-A1- 4 003 569
- DE-A1-102009 009 455
- DE-C1- 19 652 692
- JP-A- S61 160 331
- US-A- 4 845 600
- US-A1- 2010 026 045

## Beschreibung

### Hintergrund der Erfindung

Die vorliegende Erfindung betrifft eine Baugruppe zum Bilden eines Luftleitelements für ein Kraftfahrzeug.

Es ist bekannt Luftleitelemente bzw. Luftleitvorrichtungen für Kraftfahrzeuge als Luftleitelemente mit einer integrierten Bremsleuchte auszubilden. Zur Herstellung bzw. Bildung derartiger Luftleitelemente vorgesehene Baugruppen umfassen einen schalenförmigen Luftleitkörper zur Optimierung der Luftströmung beim Fahren, der in der Regel aus einem Kunststoffmaterial besteht, und die Bremsleuchte. Die Luftleitkörper sind hierbei in der Regel in flacher Ausführung als dünnwandige Spritzgusskörper mit Wandstärken innerhalb eines Bereichs von 2 mm bis 4 mm ausgebildet. Luftleitkörper mit höheren Wandstärken sind gar nicht oder nur mit wesentlichen Qualitätseinbussen spritzbar. Aufgrund dieser baulichen Vorgaben ist es erforderlich, den Luftleitkörper insbesondere auch an der mit dem Kraftfahrzeug verbundenen Bremsleuchte zu halten, um insbesondere beim Fahren ein Flattern bzw. Verformen des Luftleitkörpers infolge von Strömungskräften der Luftströmung in Umgebung des Luftleitkörpers zu vermeiden. Maßnahmen zur Erhöhung der Eigensteifigkeit des Luftleitkörpers, wie z.B. eine Verrippung, sind aufgrund der baulichen Vorgaben nur schwer oder gar nicht realisierbar.

Zum Halten des Luftleitkörpers an der an der Karosserie angebrachten Bremsleuchte werden bei den bekannten Lösungen meist Haltemittel, insbesondere Schrauben, verwendet, die den dünnwandigen Luftleitkörper durchsetzen. Diese Art der Verbindung ist zum einen nur recht aufwendig zu realisieren und ferner infolge der dünnwandigen Ausbildung sehr anfällig für ein Einreißen des Luftleitkörper-Materials in Umgebung der das Luftleitkörper-Material durchsetzenden Schraube. Zudem wird das äußere Erscheinungsbild nachteilig beeinflusst und führt zu einem minderwertigen Qualitätseindruck entsprechender Luftleitelemente.

Die Luftleitkörper bekannter Luftleitelemente mit einer integrierten Bremsleuchte weisen meist eine den Luftleitkörper durchsetzende längliche Öffnung auf, welche von der Lichtaustrittsfläche der Bremsleuchte verschlossen ist bzw. in welcher die Lichtaustrittfläche der Bremsleuchte aufgenommen ist. Am von außen sichtbaren Bereich des Luftleitelements, insbesondere in naher Umgebung der Lichtaustrittsfläche, ist daher der Einsatz von das Luftleitkörper-Material durchsetzenden Haltemitteln auch im Hinblick auf eine optische ansprechende Gestaltung des Luftleitelements problematisch. Vor allem deshalb, weil diese Haltemittel infolge der dünnwandigen Ausbildung des Luftleitkörpers nur schwerlich in das Luftleitkörper-Material versenkbar sind und daher von außen sichtbar bleiben.

Einige Beispiele von gattungsgemäßen Baugruppen zum Bilden eines Luftleitelementes können den Dokumenten DE 196 52 692 C1, JP S61 160331A und US 2010/026045 A1 entnommen werden.

### Zugrundeliegende Aufgabe

Gegenüber den bekannten Lösungen ist es Aufgabe der vorliegenden Erfindung, eine alternative Baugruppe zum Bilden eines Luftleitelements für ein Kraftfahrzeug anzugeben, mit welcher ein auf einfache und praktische Weise vornehmbares Halten des Luftleitkörpers an der Bremsleuchte möglich ist.

### Erfindungsgemäße Lösung

Diese Aufgabe wird erfindungsgemäß mit einer Baugruppe zum Bilden eines Luftleitelements für ein Kraftfahrzeug mit den Merkmalen des Anspruchs 1 gelöst.

Im Unterschied zu den bekannten Lösungen, bei denen zum Halten des Luftleitkörpers an der Bremsleuchte meist Haltemittel, insbesondere Schrauben, verwendet werden, die den dünnwandigen Luftleitkörper durchsetzen, kann durch Einsatz der erfindungsgemäßen Baugruppe von dieser Art der Halterung vorteilhaft abgesehen werden.

Im Unterschied zu den bekannten Lösungen ist an einer Halteseite eines Luftleitkörper-Abschnitts des Luftleitkörpers wenigstens ein Halteelement und an einer Halteseite der Bremsleuchte wenigstens ein Gegenhalteelement angeformt und ferner ist zum Halten des Luftleitkörpers an der Bremsleuchte in der vorgegebenen Bremsleuchten-Position das Halteelement an dem Gegenhalteelement haltbar. Über das Halteelement und das Gegenhalteelement ist vorteilhaft ein auf einfache und praktische Weise vornehmbares Halten des Luftleitkörpers, insbesondere des Luftleitkörper-Abschnittes, an der Bremsleuchte möglich. Insbesondere ist auf diese Weise eine dauerhafte Lagefixierung des Luftleitkörpers relativ zu der Bremsleuchte möglich.

Der Luftleitkörper weist eine den Luftleitkörper durchsetzende längliche Öffnung bzw. eine den Luftleitkörper durchsetzende Öffnung auf. Zum Bilden bzw. Herstellen des Luftleitelements ist die längliche Öffnung von einer Lichtaustrittsfläche der Bremsleuchte wenigstens bereichsweise oder zur Gänze verschließbar bzw. optisch verschließbar durch Anordnen der Bremsleuchte in einer vorgegebenen Bremsleuchten-Position.

Die Bremsleuchte ist in der vorgegebenen Bremsleuchten-Position ferner wenigstens bereichsweise oder zur Gänze von dem Luftleitkörper umschlossen und im verbundenen Zustand von Luftleitelement und Kraftfahrzeug ist der Luftleitkörper-Abschnitt unterhalb der Bremsleuchte angeordnet und die Halteseite des Luftleitkörper-Abschnitts ist der Halteseite der Bremsleuchte zugewandt. Aufgrund dieser erfindungsgemäß vorgesehenen Ausbildung kann erfindungsgemäß vorteilhaft ein im verbundenen Zustand von Luftleitelement und Kraftfahrzeug von außerhalb nicht sichtbares Halten des Luftleitkörpers, insbesondere des Luftleitkörper-Abschnittes, an der Bremsleuchte ermöglicht werden. Von einem bekannten aufwendigen und das äußere optische Erscheinungsbild störenden Halten bzw. Verbinden über den Luftleitkörper durchsetzende Haltemittel, wie Schrauben, kann vorteilhaft abgesehen werden. Diese Art des Haltens bzw. Verbindens ist infolge der dünnwandigen Ausbildung des Luftleitkörpers sehr anfällig für ein Einreißen des Luftleitkörper-Materials in Umgebung des das Luftleitkörper-Material durchsetzenden Haltemittels.

Insbesondere in naher Umgebung der Lichtaustrittsfläche der Bremsleuchte ist der Einsatz von das Luftleitkörper-Material durchsetzenden Haltemitteln im Hinblick auf eine optische ansprechende Gestaltung des Luftleitelements problematisch. Vor allem deshalb, weil diese Haltemittel infolge der dünnwandigen Ausbildung des Luftleitkörpers nur schwerlich in das Luftleitkörper-Material versenkbar und daher von außen sichtbar bleiben, wenn das Luftleitelement an seiner bestimmungsgemäßen Position an dem Kraftfahrzeug angebracht ist. Im Unterschied hierzu kann durch den Einsatz der erfindungsgemäßen Baugruppe im verbundenen Zustand von Luftleitelement und Kraftfahrzeug vorteilhaft ein von außen optisch sehr ansprechendes Luftleitelement mit einer integrierten Bremsleuchte bereitgestellt werden. Insbesondere ein definierter Spaltverlauf zwischen dem Luftleitkörper-Abschnitt und der Lichtaustrittsfläche der Bremsleuchte lässt sich mittels der erfindungsgemäßen Baugruppe in einfacher Weise realisieren, da zum Halten des Luftleitkörpers bzw. des Luftleitkörper-Abschnittes an der Bremsleuchte in der vorgegebenen Bremsleuchten-Position das Halteelement an dem Gegenhalteelement haltbar ist. Insbesondere kann der gleichmäßige Spaltverlauf bzw. ein gleichmäßiges Fugenbild zwischen der Lichtaustrittsfläche der Bremsleuchte und dem Luftleitkörper bereitgestellt werden, und zwar besonders vorteilhaft ein gleichmäßiger Spaltverlauf bzw. ein gleichmäßiges Fugenbild mit Toleranzen von vorzugsweise weniger als 0,5 mm. Als Luftleitkörper sind zu Erzielung eines möglichst geringen Gewichts meist nur spritzgegossene Luftleitkörper vorteilhaft einsetzbar, die jedoch nur mit einer maximalen Wandstärke von 2 mm bis 4 mm ohne wesentliche Qualitätseinbußen spritzbar sind. Daher ist durch den Einsatz von den Luftleitkörper durchsetzenden Haltemitteln ein gleichmäßiger Spaltverlauf bzw. ein gleichmäßiges Fugenbild oft nicht oder nur sehr aufwendig möglich, und zwar infolge der durch den Einsatz der Haltemittel verursachten Verformungsprozesse des dünnwandigen Luftleitkörper-Materials. Ein bei den bekannten Lösungen nicht vermeidbares Verformen bzw. Verbiegen des Luftleitkörpers zum Halten an der Bremsleuchte kann also durch den Einsatz der erfindungsgemäßen Baugruppe vorteilhaft nahezu vollständig vermieden werden.

Vorteilhaft kann durch den Einsatz der erfindungsgemäßen Baugruppe ferner auch von einem aufwendigen stoffschlüssigen Verbinden des Luftleitkörpers mit der Bremsleuchte durch ein Klebemittel abgesehen werden.

Erfindungsgemäß sind sowohl das Halteelement als auch das Gegenhalteelement hakenförmig ausgebildet, wobei zum Halten des Luftleitkörpers an der Bremsleuchte in der vorgegebenen Bremsleuchten-Position das Gegenhalteelement und das Halteelement ineinander hakbar sind.

Durch Vorsehen einer hakenförmigen Ausbildung des Halteelements und des Gegenhalteelements kann auf sehr einfache und praktische Weise durch einfach vornehmbares ineinander haken der Luftleitkörper an der Bremsleuchte gehalten werden. Besonders vorteilhaft kann durch die hakenförmige Ausbildung des Halteelements und des Gegenhalteelements auch eine passgenaue Führung bzw. Positionierung des Luftleitkörper-Abschnitts, an dem das wenigstens eine Halteelement angeformt ist, verwirklicht werden, wodurch insbesondere ein sehr gleichmäßiger Spaltverlauf bzw. ein sehr gleichmäßiges Fugenbild zwischen der Lichtaustrittsfläche der Bremsleuchte und dem Luftleitkörper durch einfaches ineinander haken verwirklicht werden kann.

Besonders bevorzugt sind das Halteelement und das Gegenhalteelement durch Schieben der Bremsleuchte in einer zu der länglichen Öffnung hin gerichteten Verschieberichtung ineinander hakbar und durch Schieben in der zu der Verschieberichtung entgegengesetzten Richtung auseinander hakbar. Eine Baugruppe gemäß dieser besonders bevorzugten Ausführungsform ermöglicht einen sehr einfach vorzunehmenden Zusammenbau der Baugruppe zu dem Luftleitelement an dem jeweiligen Kraftfahrzeug. So kann z.B. besonders praktisch zunächst der Luftleitkörper an dem Kraftfahrzeug angebracht werden. Anschließend wird die Bremsleuchte durch Schieben in der zu der länglichen Öffnung hin gerichteten Verschieberichtung in die vorgegebene Bremsleuchten-Position gebracht, wobei durch das Schieben der Luftleitkörper auch an der Bremsleuchte durch das ineinander haken gehalten werden kann. Die Bremsleuchte selbst kann nach dem ineinander haken an dem Kraftfahrzeug befestigt werden. Dadurch, dass durch Schieben in der zu der Verschieberichtung entgegengesetzten Richtung das Halteelement und das Gegenhalteelement auch auseinander hakbar sind, kann die Bremsleuchte z.B. im Wartungsfall vorteilhaft auf einfache und praktische Weise entfernt werden ohne eine vollständige Demontage des elements von dem Kraftfahrzeug vornehmen zu müssen.

Bei einer praktischen Ausführungsform liegt im aneinander gehaltenen Zustand - bzw. wenn sich die Bremsleuchte in der vorgegebenen Bremsleuchten-Position befindet - der Abstand zwischen der Halteseite der Bremsleuchte und der Halteseite des Luftleitkörper-Abschnitts im Bereich des Gegenhalteelements und des Halteelements innerhalb eines Bereichs von 2 mm bis 15 mm, vorzugsweise innerhalb eines Bereichs von 3 mm bis 13 mm, weiter vorzugsweise innerhalb eines Bereichs von 4 mm bis 12 mm, weiter vorzugsweise innerhalb eines Bereiches von 5 mm bis 9 mm, weiter vorzugsweise innerhalb eines Bereiches von 6 mm bis 8 mm liegt. Auf diese Weise ist insbesondere in naher Umgebung der Lichtaustrittsfläche der Bremsleuchte eine optisch ansprechende Gestaltung des von außen sichtbaren Bereichs des Luftleitelements möglich, die insbesondere auch vorteilhaft an die strömungstechnischen Vorgaben für den Luftleitkörper angepasst sein kann, der bevorzugt in Form eines dünnwandigen Spritzgusskörpers mit Wandstärken innerhalb eines Bereichs von 2 mm bis 4 mm ausgebildet sein kann.

Bei einer weiteren praktischen Ausführungsform ist Bremsleuchte mit einem Befestigungsmittel zum Befestigen der Bremsleuchte an dem Kraftfahrzeug versehen. Durch Vorsehen des Befestigungsmittels an der Bremsleuchte kann vorteilhaft die Montage bzw. das Befestigen der Bremsleuchte - insbesondere nach dem wenigstens bereichsweisen oder vollständigen Verschließen der länglichen Öffnung durch die Lichtaustrittsfläche - erleichtert werden.

Der Luftleitkörper kann bevorzugt aus einem spritzfähigen Kunststoffmaterial bestehen. Besonders bevorzugt kann der Luftleitkörper und/oder die Bremsleuchte wenigstens teilweise oder zur Gänze aus ABS, oder wenigstens teilweise oder zur Gänze aus einem Blendmaterial aus PC (Abk. für Polycarbonat) und ABS (Abk. für Alkylbenzolsulfonate), oder wenigstens teilweise oder zur Gänze aus einem Blendmaterial aus PC (Abk. für Polycarbonat) und PET (Abk. für Polyethylenterephthalat), oder wenigstens teilweise oder zur Gänze aus einem Blendmaterial aus PC (Abk. für Polycarbonat) und PBT (Abk. für Polybutylenterephthalat), oder wenigstens teilweise oder zur Gänze aus einem Blendmaterial aus PP (Abk. für Polypropylen) und EPDM (Abk. für Ethylen-Propylen-DienKautschuk) bestehen, wobei alle vorgenannten Materialien mit mindestens einem weiteren Füllstoff (insbesondere Mineral- und/oder Talkumfüllung) versehen sein können.

Besonders bevorzugt ist der Luftleitkörper zum Herstellen bzw. Bilden eines Heckspoilerelements mit einer integrierten Bremsleuchte oder eines Dachkanten-Heckspoilerelements mit einer integrierten Bremsleuchte in Form eines Heckspoilers oder in Form eines Dachkanten-Heckspoilers ausgebildet.

### Kurzbeschreibung der Zeichnungen

Nachfolgend wird ein Ausführungsbeispiel der Erfindung anhand der beigefügten Zeichnungen näher erläutert. Es zeigt:
- Fig. 1: eine schematische Schnittansicht eines Ausführungsbeispiel einer erfindungsgemäßen Baugruppe,
- Fig. 2: eine dreidimensionale Darstellung der Bremsleuchte der in Fig. 1 schematisch dargestellten Baugruppe, und
- Fig. 3: eine dreidimensionale Teil-Darstellung des Luftleitkörpers der in Fig. 1 schematisch dargestellten Baugruppe.

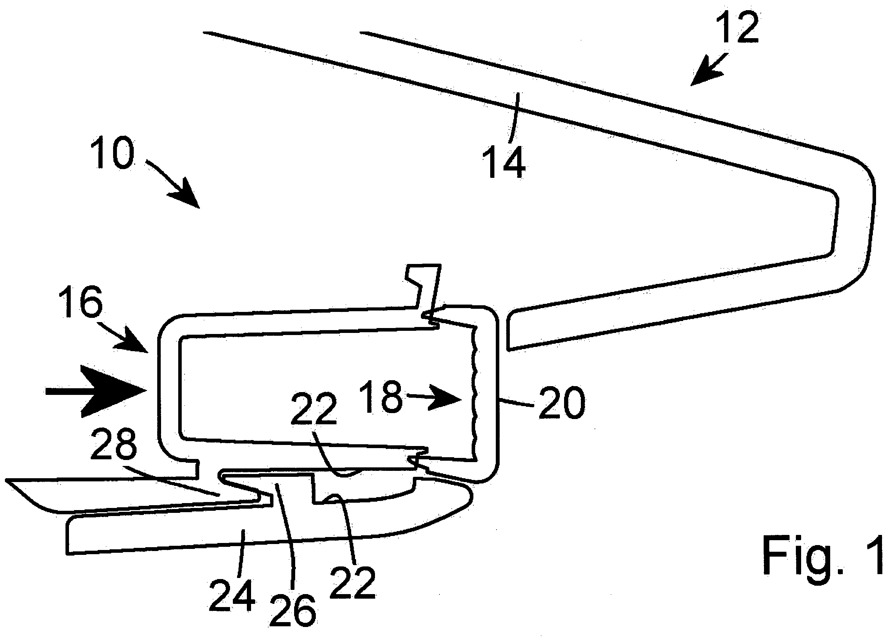

Die in Fig. 1 in Schnittdarstellung gezeigte erfindungsgemäße Baugruppe 10 zum Bilden eines Luftleitelements 12 für ein Kraftfahrzeug weist einen schalenförmigen Luftleitkörper 14 und eine Bremsleuchte 16 auf. Der Luftleitkörper 14 ist in Form eines Dachkanten-Heckspoilers 14 ausgebildet.

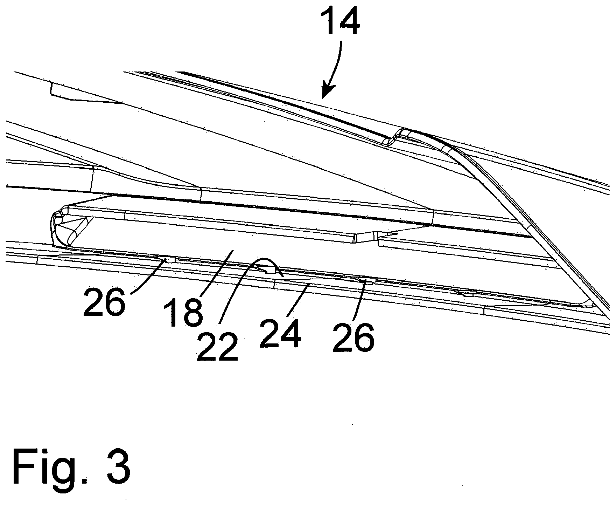

Der Luftleitkörper 14 weist eine den Luftleitkörper 14 durchsetzende längliche Öffnung 18 (vgl. auch Fig. 3) mit einer Längsachse auf, welche im mit dem jeweiligen Kraftfahrzeug (nicht dargestellt) verbundenen Zustand rechtwinkelig bzw. im Wesentlichen rechtwinkelig zur Längsrichtung des Kraftfahrzeugs orientiert ist. Der Luftleitkörper 14 ist ferner ein Spritzgusskörper bzw. dünnwandiger Spritzgusskörpers mit einer Wandstärke von 3 mm - 3,5 mm.

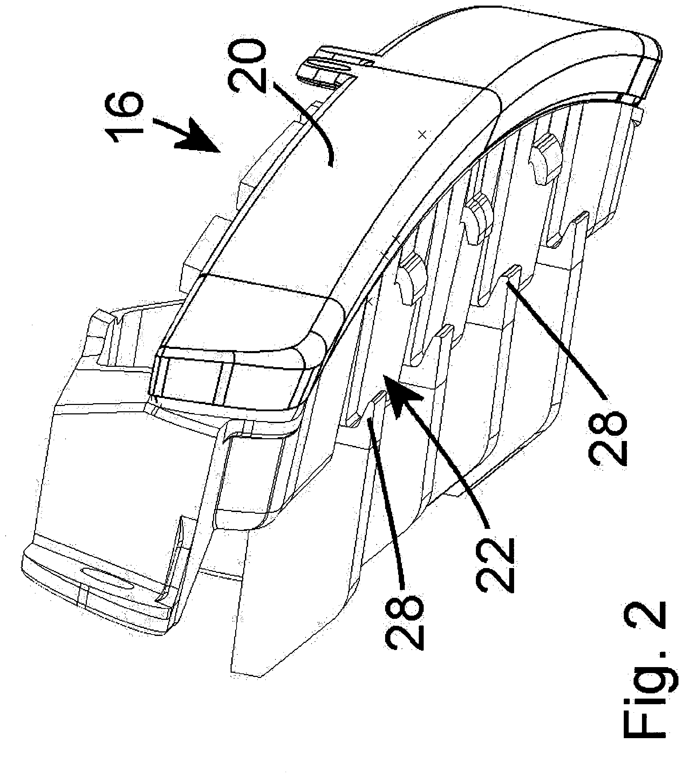

Die Fig. 1 veranschaulicht die Situation, in welcher die längliche Öffnung 18 von einer Lichtaustrittsfläche 20 (vgl. auch Fig. 2) der Bremsleuchte 16 bereichsweise verschlossen ist, wobei die Bremsleuchte16 hierfür in einer vorgegebenen Bremsleuchten-Position angeordnet wurde, in welcher die Bremsleuchte 16 bereichsweise von dem Luftleitkörper 14 umschlossen ist. Durch das bereichsweise Verschließen der länglichen Öffnung 18 durch die Lichtaustrittsfläche wurde aus dem Luftleitkörper 14 und der Bremsleuchte 16 ein Luftleitelement 12 mit einer integrierten Bremsleuchte 16 gebildet.

Wie der Fig. 3 zu entnehmen, sind an einer Halteseite 22 eines Luftleitkörper-Abschnitts 24 des Luftleitkörpers 14 vier voneinander beabstandete Halteelemente 26 angeformt, wobei die Schnittansicht in Fig. 1 nur ein Haltelement 26 zeigt. Wie der Fig. 2 zu entnehmen, sind ferner an einer Halteseite 22 der Bremsleuchte 16 vier Gegenhalteelemente 28 angeformt, wobei die Schnittansicht in Fig. 1 nur ein Gegenhaltelement 28 zeigt. Zum Halten des Luftleitkörpers 14 an der Bremsleuchte 16 in der vorgegebenen Bremsleuchten-Position ist jeweils ein Halteelement 26 an jeweils einem Gegenhalteelement 28 haltbar. Insgesamt gesehen sind daher vier Halteelement/Gegenhalteelement-Paare zum Halten des Luftleitkörpers 14 an der Bremsleuchte 16 vorgesehen. Im verbundenen Zustand von Luftleitelement 12 und Kraftfahrzeug ist der Luftleitkörper-Abschnitt 24 unterhalb der Bremsleuchte 16 angeordnet ist und die Halteseite 22 des Luftleitkörper-Abschnitts 24 ist der Halteseite 22 der Bremsleuchte 16 zugewandt.

Sowohl das Halteelement 26 als auch das Gegenhalteelement 28 sind hakenförmig ausgebildet und zum Halten des Luftleitkörpers 14 an der Bremsleuchte 16 in der vorgegebenen Bremsleuchten-Position sind das Gegenhalteelement 28 und das Halteelement 26 ineinander hakbar. Besonders montagefreundlich sind das Halteelement 26 und das Gegenhalteelement 28 durch Schieben bzw. manuelles Schieben der Bremsleuchte 16 in einer zu der länglichen Öffnung 18 hin gerichteten Verschieberichtung (vgl. auch entsprechenden Pfeil in Fig. 1) ineinander hakbar und durch Schieben bzw. manuelles Schieben in der zu der Verschieberichtung entgegengesetzten Richtung auseinander hakbar.

In dem in Fig. 1 veranschaulichten Zustand, in welchem der Luftleitkörper 14 an der Bremsleuchte 16 gehalten ist - bzw. wenn sich die Bremsleuchte 16 in der vorgegebenen Bremsleuchten-Position befindet - beträgt der Abstand zwischen der Halteseite 22 der Bremsleuchte 16 und der Halteseite 22 des Luftleitkörper-Abschnitts 24 im Bereich des Gegenhalteelements 28 und des Halteelements 26 ca. 8 mm und liegt damit innerhalb eines Bereichs von 3 mm bis 10 mm. Durch Vorsehen dieses geringen Abstands, der nur geringfügig von der Wandstärke des Luftleitkörpers 14 abweicht, ist insbesondere in naher Umgebung der Lichtaustrittsfläche 20 der Bremsleuchte 16 eine optisch ansprechende Gestaltung des von außen sichtbaren Bereichs des Luftleitelements 12 möglich, die insbesondere auch vorteilhaft an die strömungstechnischen Vorgaben für den Luftleitkörper 14 angepasst sein kann.

## Patentansprüche

1. Baugruppe (10) zum Bilden eines Luftleitelements (12) für ein Kraftfahrzeug, mit einem schalenförmigen Luftleitkörper (14) und einer Bremsleuchte (16),
wobei der Luftleitkörper (14) eine den Luftleitkörper (14) durchsetzende längliche Öffnung (18) aufweist,
wobei zum Bilden des Luftleitelements (12) die längliche Öffnung (18) von einer Lichtaustrittsfläche (20) der Bremsleuchte (16) wenigstens bereichsweise verschließbar ist durch Anordnen der Bremsleuchte (16) in einer vorgegebenen Bremsleuchten-Position, wobei die Bremsleuchte (16) in der vorgegebenen Bremsleuchten-Position wenigstens bereichsweise von dem Luftleitkörper (14) umschlossen ist,
wobei an einer Halteseite (22) eines Luftleitkörper-Abschnitts (24) des Luftleitkörpers (14) wenigstens ein Halteelement (26) und an einer Halteseite (22) der Bremsleuchte (16) wenigstens ein Gegenhalteelement (28) angeformt ist,
wobei zum Halten des Luftleitkörpers (14) an der Bremsleuchte (16) in der vorgegebenen Bremsleuchten-Position das Halteelement (26) an dem Gegenhalteelement (28) haltbar ist,
wobei im verbundenen Zustand von Luftleitelement (12) und Kraftfahrzeug der Luftleitkörper-Abschnitt (24) unterhalb der Bremsleuchte (16) angeordnet ist und die Halteseite (22) des Luftleitkörper-Abschnitts (24) der Halteseite (22) der Bremsleuchte (16) zugewandt ist,
**dadurch gekennzeichnet, dass**
sowohl das Halteelement (26) als auch das Gegenhalteelement (28) hakenförmig ausgebildet sind, wobei zum Halten des Luftleitkörpers (14) an der Bremsleuchte (16) in der vorgegebenen Bremsleuchten-Position das Gegenhalteelement (28) und das Halteelement (26) ineinander hakbar sind.

2. Baugruppe (10) nach Anspruch 1, **dadurch gekennzeichnet, dass** das Halteelement (26) und das Gegenhalteelement (28) durch Schieben der Bremsleuchte (16) in einer zu der länglichen Öffnung (18) hin gerichteten Verschieberichtung ineinander hakbar sind und durch Schieben in der zu der Verschieberichtung entgegengesetzten Richtung auseinander hakbar sind.

3. Baugruppe (10) nach einem der vorangehenden Ansprüche, **dadurch gekennzeichnet, dass** im aneinander gehaltenen Zustand der Abstand zwischen der Halteseite (22) der Bremsleuchte (16) und der Halteseite (22) des Luftleitkörper-Abschnitts (24) im Bereich des Gegenhalteelements (28) und des Halteelements (26) innerhalb eines Bereichs von 2 mm bis 15 mm, vorzugsweise innerhalb eines Bereichs von 3 mm bis 13 mm, weiter vorzugsweise innerhalb eines Bereichs von 4 mm bis 12 mm, weiter vorzugsweise innerhalb eines Bereiches von 5 mm bis 9 mm, weiter vorzugsweise innerhalb eines Bereiches von 6 mm bis 8 mm liegt.

4. Baugruppe (10) nach einem der vorangehenden Ansprüche, **dadurch gekennzeichnet**, die Bremsleuchte (16) mit einem Befestigungsmittel zum Befestigen der Bremsleuchte (16) an dem Kraftfahrzeug versehen ist.

5. Baugruppe (10) nach einem der vorangehenden Ansprüche, **dadurch gekennzeichnet, dass** der Luftleitkörper (14) in Form eines Heckspoilers oder in Form eines Dachkanten-Heckspoilers ausgebildet ist.

## Claims

1. An assembly (10) for forming an air-guiding element (12) for a motor vehicle, comprising a shell-shaped air-guiding body (14) and a brake lamp (16),
wherein the air-guiding body (14) has an elongated opening (18) which extends through the air-guiding body (14);
so as to form an air-guiding element (12), the elongated opening (18) can be closed off at least in regions by a light emitting surface (20) of the brake lamp (16) by disposing the brake lamp (16) in a predetermined brake lamp position, wherein in the predetermined brake lamp position, the brake lamp (16) is enclosed at least in regions by the air-guiding body (14);
wherein at least one retention element (26) is integrally formed on a retention side (22) of an air-guiding body portion (24) of the air-guiding body (14), and at least one counterpart retention element (28) is integrally formed on a retention side (22) of the brake lamp (16);
wherein the retention element (26) can be retained on the counterpart retention element (28) so as to retain the air-guiding body (14) on the brake lamp (16) in the predetermined brake lamp position;
wherein, in the connected state of the air-guiding element (12) and the motor vehicle, the air-guiding body portion (24) is arranged below the brake lamp (16), and the retention side (22) of the air-guiding body portion (24) faces toward the retention side (22) of the brake lamp (16),
**characterized in that**
both the retention element (26) and the counterpart retention element (28) have a hook-shaped design, the counterpart retention element (28) and the retention element (26) can be hooked into each other so as to retain the air-guiding body (14) on the brake lamp (16) in the predetermined brake lamp position.

2. An assembly (10) according to claim 1, **characterized in that** the retention element (26) and the counterpart retention element (28) can be hooked into each other by sliding the brake lamp (16) in a displacement direction that is oriented toward the elongate opening (18), and they can be unhooked from each other by sliding in a direction opposite the displacement direction.

3. An assembly (10) according to any one of the preceding claims, **characterized in that** the distance between the retention side (22) of the brake lamp (16) and the retention side (22) of the air-guiding body portion (24) in the region of the counterpart retention element (28) and of the retention element (26) is within a range of 2 mm to 15 mm, preferably within a range of 3 mm to 13 mm, further preferably within a range of 4 mm to 12 mm, further preferably within a range of 5 mm to 9 mm, and further preferably within a range of 6 mm to 8 mm, when they are retained against each other.

4. An assembly (10) according to any one of the preceding claims, **characterized in that** the brake lamp (16) is provided with an attachment means for attaching the brake lamp (16) to the motor vehicle.

5. An assembly (10) according to any one of the preceding claims, **characterized in that** the air-guiding body (14) is designed in the form of a rear spoiler, or in the form of a roof edge rear spoiler.

## Revendications

1. Ensemble (10) destiné à former un élément de guidage d'air (12) pour un véhicule automobile, comprenant un corps de guidage d'air (14) en forme de coque et un feu de freinage (16),
le corps de guidage d'air (14) présentant une ouverture (19) oblongue traversant le corps de guidage d'air (14),
l'ouverture (18) oblongue, pour la formation de l'élément de guidage d'air (12), pouvant être fermée au moins en partie par une surface de sortie de lumière (20) du feu de freinage (16) par agencement du feu de freinage (16) dans une position de feu de freinage prédéterminée, le feu de freinage (16), dans la position de feu de freinage prédéterminée, étant entouré au moins en partie par le corps de guidage d'air (14),
au moins un élément de maintien (26) étant formé sur un côté de maintien (22) d'une section (24) du corps de guidage d'air (14) et au moins un contre-élément de maintien (28) étant formé sur un côté de maintien (22) du feu de freinage (16),
l'élément de maintien (26) pouvant être maintenu sur le contre-élément de maintien (28) pour maintenir le corps de guidage d'air (14) sur le feu de freinage (16) dans la position de feu de freinage prédéterminée,
la section (24) du corps de guidage d'air, à l'état relié de l'élément de guidage d'air (14) et du véhicule automobile, étant disposée en dessous du feu de freinage (16), et le côté de maintien (22) de la section (24) du corps de guidage d'air étant tourné vers le côté de maintien (22) du feu de freinage (16),
**caractérisé en ce qu'**
aussi bien l'élément de maintien (26) que le contre-élément de maintien (26) sont réalisés en forme de crochet, le contre-élément de maintien (28) et l'élément de maintien (26) pouvant être accrochés l'un dans l'autre pour maintenir le corps de guidage d'air (14) sur le feu de freinage (16) dans la position de feu de freinage prédéterminée.

2. Ensemble (10) selon la revendication 1, **caractérisé en ce que** l'élément de maintien (26) et le contre-élément de maintien (28) peuvent être accrochés l'un dans l'autre par glissement du feu de freinage (16) dans une direction de glissement dirigée vers l'ouverture (18) oblongue et peuvent être décrochés l'un de l'autre par glissement dans la direction opposée à la direction de glissement.

3. Ensemble (10) selon l'une quelconque des revendications précédentes, **caractérisé en ce qu'**à l'état maintenu l'un sur l'autre, l'écart entre le côté de maintien (22) du feu de freinage (16) et le côté de maintien (22) de la section (24) du corps de guidage d'air est situé dans une plage de 2 mm à 15 mm, de préférence dans une plage de 3 mmm à 13 mm, de manière plus préférentielle dans une plage de 4 mm à 12 mm, de manière plus préférentielle dans une plage de 5 mm à 9 mm, de manière plus préférentielle dans une plage de 6 mm à 8 mm.

4. Ensemble (10) selon l'une quelconque des revendications précédentes, **caractérisé en ce que** le feu de freinage (16) est muni d'un moyen de fixation destiné à fixer le feu de freinage (16) sur le véhicule automobile.

5. Ensemble (10) selon l'une quelconque des revendications précédentes, **caractérisé en ce que** le corps de guidage d'air (14) est réalisé sous forme d'un becquet arrière ou sous forme d'un becquet arrière de toit.
